# EUROPÄISCHE PATENTSCHRIFT

(11) **EP 3 390 194 B1**
(45) Veröffentlichungstag und Bekanntmachung des Hinweises auf die Patenterteilung: **15.09.2021**
(21) Anmeldenummer: 17705368.3
(22) Anmeldetag: 14.02.2017
(51) Int. Cl.: B61D 35/00, B60R 15/00

(54) **WAGEN MIT EINER MEHRZAHL VON FRISCH- ODER TRINKWASSERBEHÄLTERN SOWIE VERFAHREN ZUR BEFÜLLUNG EINER MEHRZAHL VON FRISCH - ODER TRINKWASSERBEHÄLTERN**
CAR WITH A PLURALITY OF FRESH WATER OR DRINKING WATER CONTAINERS, AND METHOD FOR FILLING A PLURALITY OF FRESHWATER OR DRINKING WATER CONTAINERS
CHARIOT COMPRENANT UNE PLURALITÉ DE RÉSERVOIRS D'EAU DOUCE OU POTABLE ET PROCÉDÉ DE REMPLISSAGE D'UNE PLURALITÉ DE RÉSERVOIRS D'EAU DOUCE OU POTABLE

(30) Priorität: 02.03.2016 DE 102016203383
(43) Veröffentlichungstag der Anmeldung: 24.10.2018
(73) Patentinhaber: Siemens Mobility GmbH, 81739 München (DE)
(72) Erfinder: BRAUN, Michael, 50825 Köln (DE); GÄRTNER, Ralph, 41379 Brüggen (DE)
(86) Internationale Anmeldenummer: PCT/EP2017/053221
(87) Internationale Veröffentlichungsnummer: WO 2017/148693

(56) Entgegenhaltungen:
- WO-A1-2013/083317
- DE-A1-102009 051 351
- DE-A1-102012 211 168
- DE-A1-102014 213 653
- US-A- 1 410 607

## Beschreibung

Die Erfindung betrifft einen Wagen für ein Schienenfahrzeug mit einer Mehrzahl von innerhalb des Wagens angeordneter Frisch- oder Trinkwasserbehälter. Weiterhin betrifft die Erfindung ein Verfahren zur Befüllung einer Mehrzahl von innerhalb eines Wagens angeordneter Frisch- oder Trinkwasserbehälter.

In Schienenfahrzeugen sind meist sanitäre Einrichtungen vorgesehen, welche die komplette Frisch- oder Trinkwasseranlage, die Nasszellen inklusive der WC-Systeme sowie die Abwasseranlage umfassen. Unabhängig von der Anzahl der Verbrauchseinheiten pro Wagen ist in der Regel ein einzelner Frisch- oder Trinkwasserbehälter als Versorgungsbehälter für die Verbraucher (z.B. WC-Modul mit oder ohne Bidetfunktion, Handwaschwasser oder Urinal) innerhalb des Wagens entsprechend vorgesehen, welcher sich typischerweise im Dachbereich des Wagens befindet. Auf Grund von beschränkten Platzverhältnissen ist diese Anordnung eher unflexibel.

Ein gattungsgemäßes Schienenfahrzeug mit einer Wasserversorgungsanlage ist in der WO 2013/083317 A1 sowie in der DE 10 2014 213 653 A1 angegeben. Auch die Druckschriften DE 10 2009 051 351 A1 und DE 10 2012 211 168 A1 zeigen Schienenfahrzeuge mit Frisch- oder Trinkwasseranlagen.

Die US 1 410 607 A offenbart einen Wagen für ein Schienenfahrzeug gemäß dem Oberbegriff des unabhängigen Patentanspruchs 1.

Die Aufgabe besteht darin, einen Wagen zur Verfügung zu stellen mit einer besseren Gewichtsverteilung und Ausnutzung der Platzverhältnisse, der auf effiziente Art und Weise mit Frisch- oder Trinkwasser befüllt werden kann.

Erfindungsgemäß wird ein Wagen für ein Schienenfahrzeug zur Verfügung gestellt, welcher eine Mehrzahl von innerhalb des Wagens angeordneter Frisch- oder Trinkwasserbehälter aufweist, wobei jedem Frisch- oder Trinkwasserbehälter mindestens eine Verbrauchereinheit zum Verbrauch des Frisch- oder Trinkwassers zugeordnet ist. Ferner weist der Wagen einen Anschluss zum gemeinsamen Befüllen der Mehrzahl von Frisch- oder Trinkwasserbehältern mit Frisch- oder Trinkwasser auf sowie eine Leitung zum Befördern von Frisch- oder Trinkwasser, wobei die Leitung von dem Anschluss zu jedem der Frisch- oder Trinkwasserbehälter führen. Ferner ist innerhalb der zu der Mehrzahl von Frisch- oder Trinkwasserbehältern führenden Leitung vor jedem Frisch- oder Trinkwasserbehälter ein Ventil vorgeschaltet.

Mit dem Begriff Mehrzahl wird eine Anzahl von mindestens zwei Frisch- oder Trinkwasserbehältern pro Wagen beschrieben, wobei diese Anzahl grundsätzlich nicht nach oben beschränkt ist. Die Mehrzahl von innerhalb eines Wagens zur Verfügung gestellten Frisch- oder Trinkwasserbehältern hat den Vorteil, dass eine flexible, dezentrale Zwischenspeicherung von Frisch- oder Trinkwasser innerhalb des Wagens ermöglicht ist. Dadurch kann zusätzlicher Platz und mehr Flexibilität für weitere Komponenten generiert werden. Durch das Ventil kann der Flüssigkeitsstrom an Frisch- oder Trinkwasser in die jeweiligen Frisch- oder Trinkwasserbehälter vorteilhaft lokal reguliert bzw. geschaltet werden.

Jedem Frisch- oder Trinkwasserbehälter kann ein Füllstandmesser zum Messen des Füllstandes des jeweiligen Frisch- oder Trinkwasserbehälters zugeordnet werden. Dadurch wird vorteilhaft der Füllstand jedes Frisch- oder Trinkwasserbehälters kontrolliert, was grundsätzlich erlaubt, Maßnahmen auf Basis der Füllstände der einzelnen Frisch- oder Trinkwasserbehälter zu ergreifen. Die Frisch- oder Trinkwasserbehälter können dabei sowohl unterschiedliche Volumina aufweisen als auch voneinander abweichende Füllstände aufweisen, die von den Füllstandmessern jeweils detektiert werden.

Der Wagen kann einen Dachbereich und einen unterhalb des Dachbereichs angeordneten Wageninnenraum aufweisen, wobei die Mehrzahl der Frisch- oder Trinkwasserbehälter innerhalb des Wageninnenraums positioniert sind. Dadurch kann die Gewichtsbilanz verbessert werden, da gegenüber dem Stand der Technik das Frisch- oder Trinkwasser nicht mehr im Dachbereich angeordnet ist. Somit wird der Schwerpunkt des Wagens näher an den Fahrzeugboden beim Fahren gebracht, wodurch wiederum die fahrdynamischen Eigenschaften verbessert werden.

Der Wagen weist vorteilhaft einen ersten Anschluss zum gemeinsamen Befüllen der Mehrzahl von Frisch- oder Trinkwasserbehältern auf einer ersten Außenseite des Wagens auf und einen zweiten Anschluss zum gemeinsamen Befüllen der Mehrzahl von Frisch- oder Trinkwasserbehältern auf einer zweiten Außenseite des Wagens auf, wobei sich die erste und zweite Außenseite bevorzugt gegenüberliegen. Dies hat den Vorteil, dass insbesondere bei Schienenfahrzeugen eine Befüllung der Frisch- oder Trinkwasserbehälter von beiden Seiten möglich ist und somit der Aufwand zur Positionierung des Wagens verringert wird.

Vorzugsweise ist das Ventil ein Magnetventil. Magnetventile schalten schnell und sind daher besonders geeignet.

Der Wagen kann zudem eine Steuereinheit aufweisen, die das Befüllen mit Frisch- oder Trinkwasser am Anschluss auf Basis der Füllstände der Frisch- oder Trinkwasserbehälter steuert. Dadurch kann eine gleichzeitige Befüllung aller Frisch- oder Trinkwasserbehälter vorteilhaft realisiert werden. Im Speziellen kann eine automatische Beendigung des Befüllens implementiert werden, falls zum Beispiel alle Frisch- oder Trinkwasserbehälter vollständig gefüllt sind.

Vorzugsweise kann eine Steuereinheit das Ventil des jeweiligen Frisch- oder Trinkwasserbehälters auf Basis des Füllstandes des jeweiligen Frisch- oder Trinkwasserbehälters steuern. Durch diese lokale Steuerung wird auch der Situation Rechnung getragen, dass die Frisch- oder Trinkwasserbehälter prinzipiell unterschiedliche Volumina und damit ein voneinander abweichendes Fassungsvermögen haben können. Durch lokal stärkere Nutzung des Frisch- oder Trinkwassers über die zugeordnete Verbrauchereinheit können zudem die Füllstände der Frisch- oder Trinkwasserbehälter voneinander abweichen. Die Steuerung der Ventile erhöht die Effektivität der gleichzeitigen Befüllung einer Mehrzahl von Frisch- oder Trinkwasserbehältern. Ferner wird eine Überfüllung von einzelnen Frisch- oder Trinkwasserbehältern vermieden, wodurch auch Systemschädigungen gemindert werden können.

Das erfindungsgemäße Verfahren zur Befüllung einer Mehrzahl von Frisch- oder Trinkwasserbehältern umfasst grundsätzlich folgende Schritte: In einem ersten Schritt wird ein Wagen bereitgestellt, welcher eine Mehrzahl von innerhalb des Wagens angeordneter Frisch- oder Trinkwasserbehälter aufweist, wobei jedem Frisch- oder Trinkwasserbehälter mindestens eine Verbrauchereinheit zum Verbrauch des Frisch- oder Trinkwassers zugeordnet ist, einen Anschluss zum gemeinsamen Befüllen der Mehrzahl von Frisch- oder Trinkwasserbehältern mit Frisch- oder Trinkwasser, eine Leitung zum Befördern von Frisch- oder Trinkwasser, wobei die Leitung von dem Anschluss zu jedem der Frisch- oder Trinkwasserbehälter führen sowie Füllstandmesser zum Messen des Füllstands der Mehrzahl von Frisch- oder Trinkwasserbehältern, wobei der Wagen ein Ventil umfasst, das innerhalb der zu der Mehrzahl von Frisch- oder Trinkwasserbehältern führenden Leitung vor jedem der Frisch- oder Trinkwasserbehälter vorgeschaltet ist. Der zweite Schritt umfasst das Befüllen der Mehrzahl von Frisch- oder Trinkwasserbehältern an dem Anschluss, falls mindestens einer der Frisch- oder Trinkwasserbehälter einen Füllstand aufweist, der kleiner ist als ein jeweiliger Sollfüllstand. Der dritte Schritt umfasst das Beenden der Befüllung der Mehrzahl von Frisch- oder Trinkwasserbehältern an dem Anschluss, falls der Füllstand aller Frisch- oder Trinkwasserbehälter größer ist als der jeweilige Sollfüllstand.

Bei diesem Verfahren wird vorteilhaft eine gleichzeitige Befüllung von einer Mehrzahl von Frisch- oder Trinkwasserbehältern ermöglicht, ohne dass dabei jeder Frisch- oder Trinkwasserbehälter eigenständig befüllt werden muss. Dies reduziert ferner die Zahl der Anschlüsse.

Das Verfahren kann einen weiteren Schritt umfassen, bei dem das Ventil zu dem jeweiligen Frisch- oder Trinkwasserbehälter geschlossen wird, falls der Füllstand des jeweiligen Frisch- oder Trinkwasserbehälters größer als ein jeweiliger Sollfüllstand ist bzw. das jeweilige Ventil geöffnet wird, falls der Füllstand des jeweiligen Frisch- oder Trinkwasserbehälters kleiner ist als ein jeweiliger Sollfüllstand. Vorteilhaft wird dadurch jeder Frisch- oder Trinkwasserbehälter lokal gesteuert, wobei dem unterschiedlichen Füllstand der jeweiligen Frisch- oder Trinkwasserbehälter oder der unterschiedlichen Volumina Rechnung getragen wird. Ferner wird eine Überfüllung von einzelnen Frisch- oder Trinkwasserbehältern vermieden, wodurch auch Systemschädigungen gemindert werden können.

Das Verfahren kann ferner die Zuführung mit Frisch- oder Trinkwasser zu dem jeweiligen Frisch- oder Trinkwasserbehälter durch das Ventil drosseln, falls dessen jeweiliger Füllzustand zwischen einem jeweiligen Sollfüllstand und einem jeweiligen zweiten Füllstand liegt, wobei der jeweilige zweite Füllstand kleiner als der jeweilige Sollfüllstand ist. Mit anderen Worten bezeichnet Drosseln die Reduktion des Volumenstroms des Frisch- oder Trinkwassers zum jeweiligen Frisch- oder Trinkwasserbehälter. Eine solche Drosselung schont das System aus Leitung und Frisch- oder Trinkwasserbehälter, da hohe Drücke bzw. Stöße durch abruptes Schließen verringert werden.

Das Drosseln kann dabei stufenweise oder kontinuierlich erfolgen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
Figur 1 ein Wagen in Draufsicht mit einer Mehrzahl von Frisch- oder Trinkwasserbehältern gemäß einer ersten Ausführungsform;
Figur 2 ein Wagen in Draufsicht mit einer Mehrzahl von Frisch- oder Trinkwasserbehältern gemäß einer zweiten Ausführungsform;
Figur 3 ein Wagen in Seitenansicht;
Figur 4/5 ein Frisch- oder Trinkwasserbehälter mit Füllständen und
Figur 6 eine schematische Darstellung des erfindungsgemäßen Verfahrens.

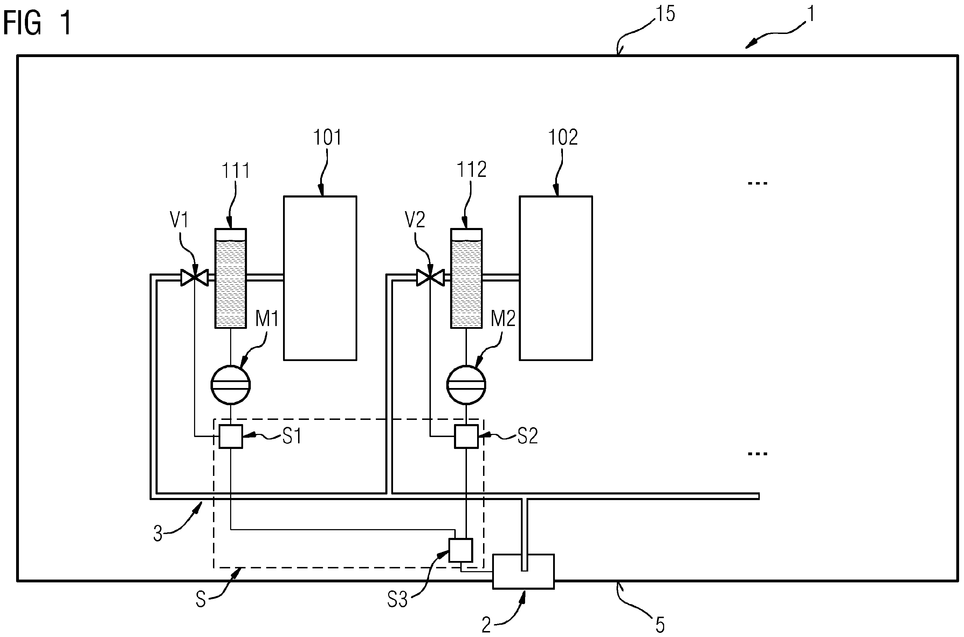

In der Figur 1 ist ein erfindungsgemäßer Wagen 1 gemäß einer ersten Ausführungsform in Draufsicht dargestellt. Der Wagen 1 umfasst eine Mehrzahl von Frisch- oder Trinkwasserbehältern 111,112, wobei jedem Frisch- oder Trinkwasserbehälter 111,112 mindestens eine Verbrauchereinheit 101,102 zum Verbrauch des Frisch- oder Trinkwassers zugeordnet ist. In dieser Ausführung sind zwei Frisch- oder Trinkwasserbehälter 111,112 dargestellt, wobei auch mehr als zwei Frisch- oder Trinkwasserbehälter 111,112 innerhalb des Wagens 1 angeordnet sein können. Ferner umfasst der Wagen einen Anschluss 2 zum Befüllen mit Frisch- oder Trinkwasser sowie eine Leitung 3 zum Befördern von Frisch- oder Trinkwasser, wobei die Leitung 3 von dem Anschluss 2 zu den Frisch- oder Trinkwasserbehälter 111,112 führt. Rein beispielhaft wird jedem Frisch- oder Trinkwasserbehälter 111,112 eine Verbrauchereinheit 101,102 zum Verbrauch des Frisch- oder Trinkwassers zugeordnet, wobei alternativ auch mehrere Verbrauchereinheiten 101,102 einem Frisch- oder Trinkwasserbehälter zugeordnet werden können. Die Volumina der Frisch- oder Trinkwasserbehälter 111,112 sind nur beispielhaft als gleich groß dargestellt. Die Erfindung umfasst ebenfalls eine Mehrzahl von Frisch- oder Trinkwasserbehältern 111,112, die unterschiedliche Volumina aufweisen.

Verbrauchereinheiten 101,102 bezeichnen jede Art von Einrichtung, die Frisch- oder Trinkwasser aus den Frisch- oder Trinkwasserbehältern 111,112 beziehen können. Beispiele sind einzelne Nasszellen, einzelne Frisch- oder Trinkwasseranlagen oder einzelne Abwasseranlagen, die unter den Begriff der Verbrauchereinheit 101,102 fallen. Jedoch sind die Beispiele nicht darauf beschränkt. Als Frisch- oder Trinkwasserbehälter 111,112 sind unter anderem auch Frisch- oder Trinkwassertanks, Wassertanks, Frisch- oder Trinkwasserspeicher, Frisch- oder Trinkwasserreservoirs zu verstehen, deren Zweck es ist Frisch- oder Trinkwasser zu speichern bzw. zwischenspeichern, um eine Verbrauchereinheit 101,102 über einen gewissen Zeitraum mit Frisch- oder Trinkwasser zu versorgen.

Die in Figur 1 dargestellte Ausführung der Positionierung der Frisch- oder Trinkwasserbehälter 111,112 innerhalb des Wagens 1 ist rein beispielhaft ausgeführt. Hierbei sind die Frisch- oder Trinkwasserbehälter 112,113 äquidistant zu den jeweiligen gegenüberliegenden Außenseiten 5,15 angeordnet, was für die Stabilität des Wagens 1 vorteilhaft ist. Jedoch erlaubt die erfindungsgemäße Mehrzahl an Frisch- oder Trinkwasserbehälter 111,112 eine sehr flexible Positionierung innerhalb des Wagens 1, die über die in Figur 1 dargestellte konkrete Ausführung hinausgeht.

Innerhalb der Leitung 3 vor jedem Frisch- oder Trinkwasserbehälter ist ein Ventil V1,V2, insbesondere ein Magnetventil, vorgeschaltet. Magnetventile können schnell schalten und sind daher besonders geeignet, wobei auch andere Ventilarten verwendet werden können. Über dieses Ventil V1,V2 ist die Menge des Zustroms von Frisch- oder Trinkwasser in den jeweiligen Frisch- oder Trinkwasserbehälter 111,112 steuerbar.

Jedem Frisch- oder Trinkwasserbehälter 111,112 ist ein Füllstandmesser M1,M2 zur Messung des jeweiligen Füllstandes des jeweiligen Frisch- oder Trinkwasserbehälters 111,112 zugeordnet. Die Füllstände F der verschiedenen Frisch- oder Trinkwasserbehälter 111,112 können dabei unterschiedlich sein, da der jeweilige Verbrauch an der jeweiligen Verbrauchseinheit 101,102 sich unterscheiden kann oder unterschiedliche Volumina vorliegen. Eine Füllstandmessung kann beispielsweise mechanisch, durch Bestimmung der elektrischen Leitfähigkeit, der Kapazität oder mittels optischer Methoden erfolgen. Die Erfindung ist jedoch nicht auf diese Methoden beschränkt. Durch den Füllstandmesser M1,M2 wird eine kontinuierliche Erfassung der jeweiligen Füllstände F ermöglicht.

In diesem Ausführungsbeispiel wird die Steuerung des jeweiligen Ventils V1,V2 von einer jeweiligen Steuereinheit S1,S2 ausgeführt, die sowohl eine Verbindung zum Erhalt von Signalen vom jeweiligen Füllstandmesser M1,M2 als auch eine Verbindung zum Übertragen von Signalen zum jeweiligen Ventil V1,V2 aufweist. Von jeder Steuereinheit S1,S2 führt eine weitere Verbindung zum Übertragen von Signalen zu einer weiteren Steuereinheit S3, über die der Anschluss 2 gesteuert werden kann.

Der Begriff der Verbindung ist hierbei nur zur Illustration der Figuren zu verstehen. Die Übertragung von Signalen bzw. die Kommunikation kann auf jede zweckmäßige Art und Weise geschehen sowohl in dieser Figur als auch in den folgenden Figuren.

Die Funktionsweise besteht darin, dass ein jeweiliger Füllstandmesser M1,M2 den Füllstand des jeweiligen Frisch- oder Trinkwasserbehälters 101,102 misst und an die jeweilige Steuereinheit S1,S2 übergibt. Die jeweilige Steuereinheit S1,S2 überträgt auf Basis des Füllstandes F ein Signal an das jeweilige Ventil V1,V2 sowie an die Steuereinheit S3. Das jeweilige Ventil V1,V2 ist somit auf Basis des jeweiligen Füllstands F des zugehörigen Frisch- oder Trinkwasserbehälters 111,112 lokal steuerbar. An den Eingang der Steuereinheit S3 werden Signale von allen Füllständen F der Mehrzahl von Frisch- oder Trinkwasserbehältern 111,112 geführt, so dass die Steuereinheit S3 auf Basis aller Füllstände F das Befüllen am Anschluss 2 steuern kann. Somit ist der Anschluss 2 steuerbar auf Basis der Gesamtheit aller Füllstände pro Wagen 1.

Es wird durch den beschriebenen Wagen 1 vorteilhaft ein gleichzeitiges Befüllen der Mehrzahl von Frisch- oder Trinkwasserbehältern 111,112 ermöglicht.

Ein Steuergerät S umfasst die Steuereinheiten S1,S2 und S3, dargestellt durch gestrichelte Linien in Figur 1. Dieses Steuergerät S erfüllt dabei sowohl die Aufgabe der lokalen Besteuerung der jeweiligen Ventile V1,V2 als auch die Besteuerung der Befüllung am Anschluss 2. Die in Figur 1 nur beispielhaft separat ausgeführten Steuerungen durch die Steuereinheiten S1, S2 und S3 können somit auch von nur einem integrierten Steuergerät S übernommen werden, was durch die gestrichelten Linien in Figur 1 angezeigt wird.

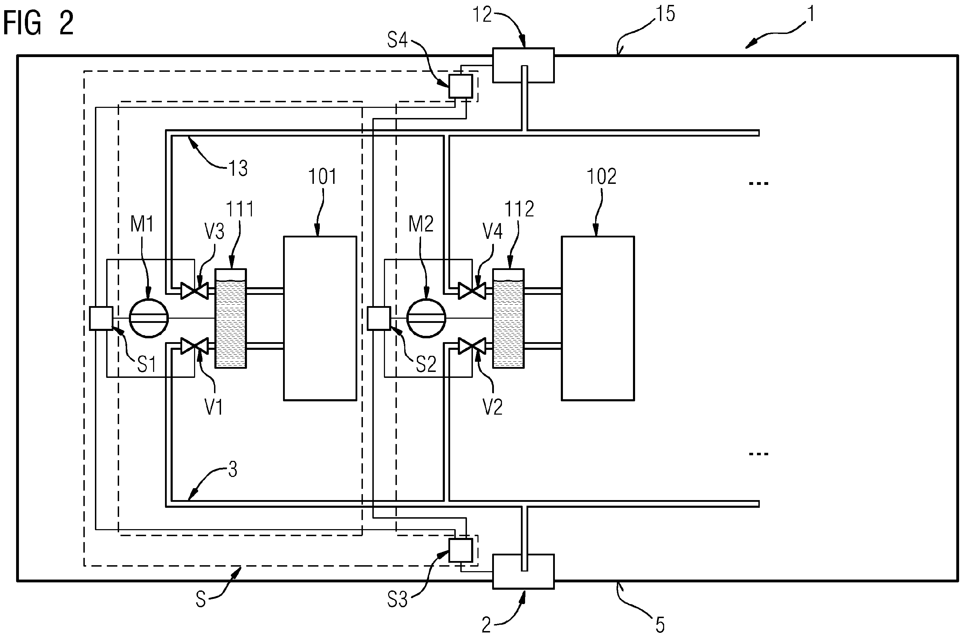

In der Figur 2 ist ein erfindungsgemäßer Wagen 1 gemäß einer zweiten Ausführungsform in Draufsicht dargestellt. Im Unterschied zu Figur 1 weist der Wagen 1 zwei Anschlüsse 2,12 zum Befüllen mit Frisch- oder Trinkwasser auf. Ein erster Anschluss 2 befindet sich zum Befüllen des Frisch- oder Trinkwassers auf einer ersten Außenseite 5 des Wagens 1. Ein zweiter Anschluss 12 befindet sich auf einer zweiten Außenseite 15 des Wagens 1. Von jedem Anschluss 2,12 führt eine Leitung 3,13 zu der Mehrzahl von Frisch- oder Trinkwasserbehältern 111,112, so dass die Frisch- oder Trinkwasserbehälter 111,112 von beiden Anschlüssen 2,12 befüllt werden können. Zudem ist innerhalb jeder zu den Frisch- oder Trinkwasserbehältern 111,112 führender Leitung 3,13 vor jedem Frisch- oder Trinkwasserbehälter 111,112 ein Ventil V1,V2,V3,V4, insbesondere ein Magnetventil, vorgeschaltet. Analog zu Figur 1 sind den jeweiligen Frisch- oder Trinkwasserbehälter Füllstandmesser M1,M2 zugeordnet, die wiederum mit einer Steuereinheit S1,S2 verbunden sind bzw. kommunizieren können. Die Steuereinheit S1 bzw. S2 weist beispielhaft Verbindungen zur Übertragung von Signalen zu den zugehörigen Ventilen V1,V3 bzw. V2,V4 auf, um dadurch den Zustrom in den jeweiligen Frisch- oder Trinkwasserbehälter 111,112 lokal zu steuern. Ferner weist die Steuereinheit S1 und S2 jeweils beispielhaft Verbindungen zur Übertragung von Signalen zu den jeweiligen Steuereinheiten S3,S4 auf, um die jeweiligen Anschlüsse 2,12 auf Basis aller Füllstände F zu steuern. Es wird durch den beschriebenen Wagen 1 vorteilhaft ein gleichzeitiges Befüllen der Mehrzahl von Frisch- oder Trinkwasserbehältern 111,112 ermöglicht.

Ebenso wie in Figur 1 kann ein Steuergerät S die Steuereinheiten S1,S2 und S3 bzw. S4 umfassen, dargestellt durch gestrichelte Linien in Figur 2. Dieses Steuergerät S erfüllt dabei sowohl die Aufgabe der lokalen Besteuerung der jeweiligen Ventile V1,V2,V3,V4 als auch die Besteuerung der Befüllung am Anschluss 2,12. Die in Figur 2 nur beispielhaft separat ausgeführten Steuerungen von S1, S2 und S3 bzw. S4 können somit auch von nur einem integrierten Steuergerät S übernommen werden, was durch die gestrichelten Linien in Figur 2 angezeigt wird.

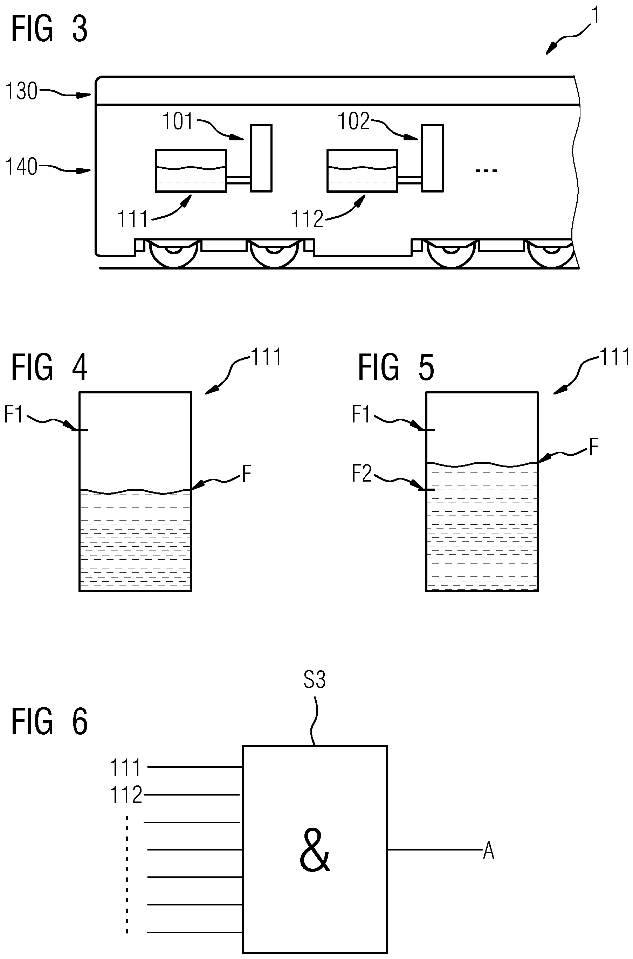

In Figur 3 wird ein erfindungsgemäßer Wagen 1 in Seitenansicht dargestellt. Innerhalb des Wagens 1 ist eine Mehrzahl von Frisch- oder Trinkwasserbehältern 111,112 angeordnet, wobei rein beispielhaft jedem Frisch- oder Trinkwasserbehälter 111,112 eine Verbrauchereinheit 101,102 zum Verbrauch des Frisch- oder Trinkwassers zugeordnet ist. Alternativ kann auch jedem Frisch- oder Trinkwasserbehälter 111,112 mehr als eine Verbrauchseinheit 101,102 zugeordnet werden. Der Wagen 1 ist in zwei Abschnitte eingeteilt. Der obere Abschnitt betrifft einen Dachbereich 130 des Wagens 1, der untere Abschnitt einen Wageninnenbereich 140 des Wagens 1. Dabei befinden sich die Frisch- oder Trinkwasserbehälter 111,112 ausschließlich im Wageninnenbereich 140 und nicht wie bei Fahrzeugen des Standes der Technik im Dachbereich 130. Durch diese Anordnung wird die Gewichtsbilanz positiv beeinflusst und der Schwerpunkt des Wagens näher an den Fahrzeugboden geführt, wodurch ferner die fahrdynamischen Eigenschaften verbessert werden.

Figur 4 und Figur 5 zeigen zwei Frisch- oder Trinkwasserbehälter 111. Hierbei wird der momentane Füllstand F angezeigt. Ein Sollfüllstand F1, der hierbei beispielhaft oberhalb des Füllstands F liegt, definiert eine Schwelle zwischen einem nicht vollständig gefüllten Zustand und einem vollständig gefüllten Zustand. In Figur 5 ist ferner ein zweiter Füllstand F2 angezeigt, der kleiner ist als der Sollfüllstand F1. Dieser zweite Füllstand F2 stellt eine Schwelle zum Drosseln des Befüllens dar, was im Zusammenhang mit dem in der Folge beschriebenen Verfahren verständlicher wird. Beispielhaft liegt der Füllstand F zwischen dem Sollfüllstand F1 und dem zweiten Füllstand F2.

Figur 6 zeigt eine schematische Darstellung des erfindungsgemäßen Verfahrens zur Befüllung einer Mehrzahl von Frisch- oder Trinkwasserbehältern 111,112. Das Verfahren kann vereinfacht mit Hilfe eines AND-Gatters dargestellt werden, das beispielhaft die Funktion der Steuereinheit S3 bzw. S4 darstellt. Dieser Darstellung liegt zu Grunde, dass jeder Frisch- oder Trinkwasserbehälter 111,112 grundsätzlich die beiden Zustände "vollständig gefüllt" oder "nicht vollständig gefüllt" einnehmen kann, was einer binären Logik entspricht. Alternativ können auch die Zustände "leer" bzw. "Füllen notwendig" an jedem Frisch- oder Trinkwasserbehälter 111,112 detektiert werden. Der jeweilige Zustand wird durch Vergleich des jeweiligen Füllstandes F mit dem jeweiligen Sollfüllstand F1 ermittelt. Ist der jeweilige Füllstand F kleiner als der jeweilige Sollfüllstand F1, so liegt der Zustand "nicht vollständig gefüllt" vor, was einer logischen 0 entspricht. Ist der jeweilige Füllstand F größer als der jeweilige Sollfüllstand F1, so liegt der Zustand "vollständig gefüllt" vor, was einer logischen 1 entspricht. An die Eingänge des AND-Gatters werden nun die jeweiligen Zustände der Frisch- oder Trinkwasserbehälter 111,112 gelegt. Nach Figur 1 oder 2 kann dies beispielsweise durch eine Verbindung zur Übertragung von Signalen zwischen Füllstandmesser M1,M2, Steuereinheit S1,S2 zu der Steuereinheit S3 bzw. S4 realisiert werden.

Am Ausgang des AND-Gatters liegt der gesteuerte Zustand des Anschlusses 2,12 vor, hier mit A bezeichnet. Wenn A den Wert 0 annimmt, dann entspricht das dem Zustand "Befüllen", wobei dabei die Mehrzahl der Frisch- oder Trinkwasserbehälter 111,112 mit Frisch- oder Trinkwasser befüllt wird. Wenn A den Wert 1 annimmt, dann entspricht das dem Zustand "Beenden der Befüllung", wobei dabei über den Anschluss 2,12 kein Frisch- oder Trinkwasser mehr in die Leitung 3,13 eingespeist wird, was einem Füllstop entspricht. Ein solcher Füllstop kann auch über eine Befüllstopsteckdose erfolgen.

Durch die Logik des AND-Gatters werden somit die folgenden Schritte des erfindungsmäßen Verfahrens beschrieben: Befüllen der Mehrzahl von Frisch- oder Trinkwasserbehältern an dem Anschluss 2,12, wenn mindestens einer der Frisch- oder Trinkwasserbehälter 111,112 einen Füllstand F aufweist, der kleiner ist als ein jeweiliger Sollfüllstand F1 sowie Beenden der Befüllung der Mehrzahl von Frisch- oder Trinkwasserbehältern 111,112 an dem Anschluss 2,12, falls der Füllstand F aller Frisch- oder Trinkwasserbehälter 111,112 größer als der jeweilige Sollfüllstand F1 ist.

Diese beiden Schritte bilden zusammen mit dem folgenden Schritt der Bereitstellung eines Wagens 1, der eine Mehrzahl von innerhalb des Wagens 1 angeordneter Frisch- oder Trinkwasserbehälter 111,112 aufweist, wobei jedem Frisch- oder Trinkwasserbehälter 111,112 mindestens eine Verbrauchereinheit 101,102 zum Verbrauch des Frisch- oder Trinkwassers zugeordnet ist, einen Anschluss 2,12 zum Befüllen mit Frisch- oder Trinkwasser, eine Leitung 3,13 zum Befördern von Frisch- oder Trinkwasser, wobei die Leitung 3,13 von dem Anschluss 2,12 zu den Frisch- oder Trinkwasserbehälter 111,112 führen sowie Füllstandmesser M1,M2 zum Messen des Füllstands F der Mehrzahl von Frisch- oder Trinkwasserbehältern 111,112, das erfindungsgemäße Verfahren.

Das Verfahren zur Befüllung einer Mehrzahl von Frisch- oder Trinkwasserbehältern 111,112 kann noch einen weiteren Schritt aufweisen. in einem weiteren Schritt wird innerhalb jeder zu der Mehrzahl von Frisch- oder Trinkwasserbehältern 111,112 führenden Leitung 3,13 ein Ventil V1,V2,V3,V4 vorgeschaltet und das Ventil V1,V2,V3,V4 zu dem jeweiligen Frisch- oder Trinkwasserbehälter 111,112 geschlossen, falls der Füllstand F des jeweiligen Frisch- oder Trinkwasserbehälters 111,112 größer als ein jeweiliger Sollfüllstand F1 ist bzw. das jeweilige Ventil V1,V2,V3,V4 geöffnet wird, falls der Füllstand F des jeweiligen Frisch- oder Trinkwasserbehälters 111,112 kleiner ist als ein jeweiliger Sollfüllstand F1. Dieser Verfahrensschritt wird durch die Verbindung zur Übertragung von Signalen der Steuereinheit S1,S2 an die Ventile V1,V2,V3,V4 ermöglicht, so dass diese auf Basis der jeweiligen Füllstände F ihrer zugeordneten Frisch- oder Trinkwasserbehälter 111,112 gesteuert bzw. geschlossen werden können.

Das Verfahren zur Befüllung einer Mehrzahl von Frisch- oder Trinkwasserbehältern 111,112 kann ferner noch einen weiteren Schritt aufweisen. Durch das Ventil V1,V2,V3,V4 kann die Zuführung mit Frisch- oder Trinkwasser zu dem jeweiligen Frisch- oder Trinkwasserbehälter 111,112 gedrosselt werden, falls dessen jeweiliger Füllstand F zwischen einem jeweiligen Sollfüllstand F1 und einem jeweiligen zweiten Füllstand F2 liegt, wobei der jeweilige zweite Füllstand F2 kleiner ist als der jeweilige Sollfüllstand F1. Eine solche Konstellation ist in Figur 5 dargestellt. Drosseln bezeichnet hierbei die Reduktion des Volumenstroms des Frisch- oder Trinkwassers zum jeweiligen Frisch- oder Trinkwasserbehälter. Der Vorteil dieses Verfahrensschritts liegt in der Minderung von Druckstößen. Die Drosselung kann hierbei sowohl kontinuierlich als auch stufenweise erfolgen. Eine solche Drosselung schont das System aus Leitung 3,13 und Frisch- oder Trinkwasserbehälter 111,112, da hohe Drücke bzw. Stöße durch abruptes Schließen verringert werden.

Zusammenfassend erlaubt die Erfindung eine dezentrale Anordnung einer Mehrzahl von Frisch- oder Trinkwasserbehältern 111,112 innerhalb eines Wagens 1. Dies ermöglicht eine flexiblere Positionierung der Frisch- oder Trinkwasserbehälter 111,112 und auch eine flexiblere Positionierung anderer Komponenten innerhalb des Wagens 1. Zusätzlich wird durch eine dezentrale Anordnung der Mehrzahl der Frisch- oder Trinkwasserbehälter 111,112 die Schwerpunktlage des Wagens näher an den Fahrboden gebracht, wodurch die fahrdynamischen Eigenschaften verbesserte werden können. Das erfindungsgemäße Verfahren ermöglicht eine gleichzeitige Befüllung einer Mehrzahl von Frisch- oder Trinkwasserbehältern 111,112 mit unterschiedlichen Volumina und Füllständen F ohne zusätzliche Anschlüsse zum Befüllen, was durch kontinuierliches Erfassen von Füllständen F, vorgeschaltete Ventile sowie Steuereinheiten S1,S2,S3,S4 bzw. einem Steuergerät S zur Übertragung von Signalen realisiert wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

## Patentansprüche

1. Wagen (1) für ein Schienenfahrzeug umfassend:
- eine Mehrzahl von innerhalb des Wagens (1) angeordneter Frisch- oder Trinkwasserbehälter (111,112);
- einen Anschluss (2,12) zum gemeinsamen Befüllen der Mehrzahl von Frisch- oder Trinkwasserbehältern (111,112) mit Frisch- oder Trinkwasser;
**dadurch gekennzeichnet, dass**
- jedem Frisch- oder Trinkwasserbehälter (111,112) mindestens eine Verbrauchereinheit (101,102) zum Verbrauch von Frisch- oder Trinkwasser zugeordnet ist;
- der Wagen (1) eine Leitung (3,13) zum Befördern von Frisch- oder Trinkwasser umfasst, wobei die Leitung von dem Anschluss (2,12) zu jedem der Frisch- oder Trinkwasserbehälter (111,112) führt;
- der Wagen (1) ein Ventil (V1,V2,V3,V4) umfasst, das innerhalb der zu der Mehrzahl von Frisch- oder Trinkwasserbehältern (111,112) führenden Leitung (4,5) vor jedem der Frisch- oder Trinkwasserbehälter (111,112) vorgeschaltet ist.

2. Wagen (1) nach Anspruch 1,
wobei jedem Frisch- oder Trinkwasserbehälter (111,112) ein Füllstandmesser (M1,M2) zum Messen des Füllstandes (F) des jeweiligen Frisch- oder Trinkwasserbehälters (111,112) zugeordnet ist.

3. Wagen (1) nach einem der vorherigen Ansprüche,
wobei der Wagen (1) einen Dachbereich (130) und einen unterhalb des Dachbereichs (130) angeordneten Wageninnenraum (140) aufweist, wobei die Mehrzahl der Frisch- oder Trinkwasserbehälter (111,112) innerhalb des Wageninnenraums (140) positioniert sind.

4. Wagen (1) nach einem der vorherigen Ansprüche,
wobei zwei Anschlüsse (2,12) vorgesehen sind, wobei sich ein erster Anschluss (2) zum gemeinsamen Befüllen der Mehrzahl von Frisch- oder Trinkwasserbehältern (111,112) mit Frisch- oder Trinkwasser (111,112) auf einer ersten Außenseite (5) des Wagens (1) befindet und sich ein zweiter Anschluss (12) zum gemeinsamen Befüllen der Mehrzahl von Frisch- oder Trinkwasserbehältern (111,112) mit Frisch- oder Trinkwasser (111,112) auf einer zweiten Außenseite (15) des Wagens (1) befindet, wobei sich erste und zweite Außenseite (5,15) bevorzugt gegenüberliegen.

5. Wagen (1) nach einem der vorherigen Ansprüche,
wobei das Ventil (V1,V2,V3,V4) ein Magnetventil ist.

6. Wagen (1) nach einem der vorherigen Ansprüche 2 bis 5, wobei eine Steuereinheit (S3,S4) das Befüllen mit Frisch- oder Trinkwasser am Anschluss (2,12) auf Basis der Füllstände (F) der Frisch- oder Trinkwasserbehälter (111,112) steuert.

7. Wagen (1) nach einem der vorherigen Ansprüche 2 bis 6, wobei eine Steuereinheit (S1,S2) das Ventil (V1,V2,V3,V4) des jeweiligen Frisch- oder Trinkwasserbehälters (111,112) auf Basis des Füllstandes (F) des jeweiligen Frisch- oder Trinkwasserbehälters (111,112) steuert.

8. Verfahren zur Befüllung einer Mehrzahl von Frisch- oder Trinkwasserbehältern (111,112) umfassend die folgenden Schritte:
a) Bereitstellen eines Wagens (1) umfassend:
- eine Mehrzahl von innerhalb des Wagens (1) angeordneter Frisch- oder Trinkwasserbehälter (111,112), wobei jedem Frisch- oder Trinkwasserbehälter (111,112) mindestens eine Verbrauchereinheit (101,102) zum Verbrauch von Frisch- oder Trinkwasser zugeordnet ist;
- einen Anschluss (2,12) zum gemeinsamen Befüllen der Mehrzahl von Frisch- oder Trinkwasserbehältern (111,112) mit Frisch- oder Trinkwasser;
- eine Leitung (3,13) zum Befördern von Frisch- oder Trinkwasser, wobei die Leitung (3,13) von dem Anschluss (2,12) zu jedem der Frisch- oder Trinkwasserbehälter (111,112) führt;
- Füllstandmesser (M1,M2) zum Messen des Füllstandes (F) der Mehrzahl von Frisch- oder Trinkwasserbehältern (111,112);
- ein Ventil (V1,V2,V3,V4), das innerhalb der zu der Mehrzahl von Frisch- oder Trinkwasserbehältern (111,112) führenden Leitung (4,5) vor jedem der Frisch- oder Trinkwasserbehälter (111,112) vorgeschaltet ist;
b) Befüllen der Mehrzahl von Frisch- oder Trinkwasserbehältern (111,112) an dem Anschluss (2,12), wenn mindestens einer der Frisch- oder Trinkwasserbehälter (111,112) einen Füllstand (F) aufweist, der kleiner ist als ein jeweiliger Sollfüllstand (F1);
c) Beenden der Befüllung der Mehrzahl von Frisch- oder Trinkwasserbehältern (111,112) an dem Anschluss (2,12), falls der Füllstand (F) aller Frisch- oder Trinkwasserbehälter (111,112) größer als der jeweilige Sollfüllstand (F1) ist.

9. Verfahren nach Anspruch 8, wobei in einem weiteren Schritt d) das Ventil (V1,V2,V3,V4) zu dem jeweiligen Frisch- oder Trinkwasserbehälter (111,112) geschlossen wird, falls der Füllstand (F) des jeweiligen Frisch- oder Trinkwasserbehälters (111,112) größer als ein jeweiliger Sollfüllstand (F1) ist bzw. das jeweilige Ventil (V1,V2,V3,V4) geöffnet wird, falls der Füllstand (F) des jeweiligen Frisch- oder Trinkwasserbehälters (111,112) kleiner ist als ein jeweiliger Sollfüllstand (F1).

10. Verfahren nach Anspruch 9,
wobei durch das Ventil (V1,V2,V3,V4) die Zuführung mit Frisch- oder Trinkwasser zu dem jeweiligen Frisch- oder Trinkwasserbehälter (111,112) gedrosselt wird, falls dessen jeweiliger Füllstand (F) zwischen einem jeweiligen Sollfüllstand(F1) und einem jeweiligen zweiten Füllstand (F2) liegt, wobei der jeweilige zweite Füllstand (F2) kleiner ist als der jeweilige Sollfüllstand (F1).

11. Verfahren nach Anspruch 10,
wobei das Drosseln stufenweise oder kontinuierlich erfolgt.

## Claims

1. Carriage (1) for a rail vehicle, comprising:
- a plurality of fresh-water or drinking-water containers (111, 112) which are arranged within the carriage (1);
- a connection (2, 12) for joint filling of the plurality of fresh-water or drinking-water containers (111, 112) with fresh water or drinking water;
**characterized in that**
- each fresh-water or drinking-water container (111, 112) is assigned at least one consumer unit (101, 102) for consumption of fresh water or drinking water;
- the carriage (1) comprises a line (3, 13) for conveyance of fresh water or drinking water, wherein the line leads from the connection (2, 12) to each of the fresh-water or drinking-water containers (111, 112) ;
- the carriage (1) comprises a valve (V1, V2, V3, V4) which is arranged upstream of each of the fresh-water or drinking-water containers (111, 112) within the line (4, 5) leading to the plurality of fresh-water or drinking-water containers (111, 112).

2. Carriage (1) according to Claim 1,
wherein each fresh-water or drinking-water container (111, 112) is assigned a fill-level measuring device (M1, M2) for measuring the fill level (F) of the respective fresh-water or drinking-water container (111, 112).

3. Carriage (1) according to either of the preceding claims, wherein the carriage (1) has a roof region (130) and a carriage interior space (140) which is arranged beneath the roof region (130), wherein the plurality of fresh-water or drinking-water containers (111, 112) are positioned within the carriage interior space (140).

4. Carriage (1) according to one of the preceding claims, wherein two connections (2, 12) are provided, wherein a first connection (2) for joint filling of the plurality of fresh-water or drinking-water containers (111, 112) with fresh water or drinking water (111, 112) is situated on a first outer side (5) of the carriage (1), and a second connection (12) for joint filling of the plurality of fresh-water or drinking-water containers (111, 112) with fresh water or drinking water (111, 112) is situated on a second outer side (15) of the carriage (1), wherein the first and second outer sides (5, 15) are preferably opposite one another.

5. Carriage (1) according to one of the preceding claims, wherein the valve (V1, V2, V3, V4) is a solenoid valve.

6. Carriage (1) according to one of the preceding Claims 2 to 5,
wherein a control unit (S3, S4) controls the filling with fresh water or drinking water at the connection (2, 12) on the basis of the fill levels (F) of the fresh-water or drinking-water containers (111, 112).

7. Carriage (1) according to one of the preceding Claims 2 to 6,
wherein a control unit (S1, S2) controls the valve (V1, V2, V3, V4) of the respective fresh-water or drinking-water container (111, 112) on the basis of the fill level (F) of the respective fresh-water or drinking-water container (111, 112).

8. Method for filling a plurality of fresh-water or drinking-water containers (111, 112), comprising the following steps:
a) providing a carriage (1) comprising:
- a plurality of fresh-water or drinking-water containers (111, 112) which are arranged within the carriage (1), wherein each fresh-water or drinking-water container (111, 112) is assigned at least one consumer unit (101, 102) for consumption of fresh water or drinking water;
- a connection (2, 12) for joint filling of the plurality of fresh-water or drinking-water containers (111, 112) with fresh water or drinking water;
- a line (3, 13) for conveyance of fresh water or drinking water, wherein the line (3, 13) leads from the connection (2, 12) to each of the fresh-water or drinking-water containers (111, 112);
- fill-level measuring devices (M1, M2) for measuring the fill level (F) of the plurality of fresh-water or drinking-water containers (111, 112);
- a valve (V1, V2, V3, V4) which is arranged upstream of each of the fresh-water or drinking-water containers (111, 112) within the line (4, 5) leading to the plurality of fresh-water or drinking-water containers (111, 112);
b) filling the plurality of fresh-water or drinking-water containers (111, 112) at the connection (2, 12) when at least one of the fresh-water or drinking-water containers (111, 112) has a fill level (F) which is lower than a respective target fill level (F1);
c) ending the filling of the plurality of fresh-water or drinking-water containers (111, 112) at the connection (2, 12) if the fill level (F) of all the fresh-water or drinking-water containers (111, 112) is higher than the respective target fill level (F1).

9. Method according to Claim 8,
wherein, in a further step d),
the valve (V1, V2, V3, V4) to the respective fresh-water or drinking-water container (111, 112) is closed if the fill level (F) of the respective fresh-water or drinking-water container (111, 112) is higher than a respective target fill level (F1), or the respective valve (V1, V2, V3, V4) is opened if the fill level (F) of the respective fresh-water or drinking-water container (111, 112) is lower than a respective target fill level (F1).

10. Method according to Claim 9,
wherein the supply of fresh water or drinking water to the respective fresh-water or drinking-water container (111, 112) is throttled by the valve (V1, V2, V3, V4) if the respective fill level (F) thereof lies between a respective target fill level (F1) and a respective second fill level (F2), wherein the respective second fill level (F2) is lower than the respective target fill level (F1).

11. Method according to Claim 10,
wherein the throttling is realized in a stepped or continuous manner.

## Revendications

1. Voiture (1) d'un véhicule ferroviaire comprenant :
- une pluralité de réservoirs (111, 112) d'eau fraîche ou d'eau potable disposés à l'intérieur de la voiture (1) ;
- un raccord (2, 12) pour remplir conjointement la pluralité de réservoirs (111, 112) d'eau fraîche ou d'eau potable ;
**caractérisé en ce que**
- au moins une unité (101, 102) de consommateur pour la consommation d'eau fraîche ou d'eau potable est associée à chaque réservoir (111, 112) d'eau fraîche ou d'eau potable ;
- la voiture (1) comprend un conduit pour l'acheminement d'eau fraîche ou d'eau potable, le conduit menant du raccord (2, 12) à chacun des réservoirs (111, 112) d'eau fraîche ou d'eau potable ;
- la voiture (1) comprend une vanne (V1, V2, V3, V4) qui, dans le conduit (4, 5) menant à la pluralité de réservoirs, 111, 112) d'eau fraîche ou d'eau potable, est montée en amont de chacun des réservoirs (111, 112) d'eau fraîche ou d'eau potable.

2. Voiture (1) suivant la revendication 1,
dans laquelle un dispositif (M1, M2) de mesure du niveau pour mesurer le niveau (F) dans le réservoir (111, 112) respectif d'eau fraîche ou d'eau potable est associé à chaque réservoir (111, 112) d'eau fraîche ou d'eau potable.

3. Voiture (1) suivant l'une des revendications précédentes, dans laquelle la voiture (1) a une partie (130) de toit et un espace (140) intérieur disposé en-dessous de la partie (130) de toit, dans laquelle la pluralité des réservoirs (111, 112) d'eau fraîche ou d'eau potable est disposée à l'intérieur de l'espace (140) intérieur de la voiture.

4. Voiture (1) suivant l'une des revendications précédentes, dans laquelle il est prévu deux raccords (2, 12) dans laquelle un premier raccord (2), pour remplir conjointement d'eau (111, 112) fraîche ou d'eau potable la pluralité de réservoirs (111, 112) d'eau fraîche ou d'eau potable, se trouve d'un premier côté (5) extérieur de la voiture (1) et un deuxième raccord (12) pour remplir conjointement d'eau (111, 112) fraîche ou d'eau potable, la pluralité de réservoirs (111, 112) d'eau fraîche ou d'eau potable, se trouve d'un deuxième côté (15) extérieur de la voiture (1), le premier et le deuxième côté (5, 15) extérieurs étant de préférence opposés.

5. Voiture (1) suivant l'une des revendications précédentes, dans laquelle la vanne (V1, V2, V3, V4) est une électrovanne.

6. Voiture (1) suivant l'une des revendications 2 à 5 précédentes, dans laquelle une unité (S3, S4) de commande commande le remplissage par de l'eau fraîche ou de l'eau potable au raccord (2, 12) sur la base des niveaux (F) dans le réservoir (111, 112) d'eau fraîche ou d'eau potable.

7. Voiture (1) suivant l'une des revendications 2 à 6 précédentes, dans laquelle une unité (S1, S2) de commande commande la vanne (V1, V2, V3, V4) du réservoir (111, 112) respectif d'eau fraîche ou d'eau potable sur la base du niveau (F) dans le réservoir (111, 112) d'eau fraîche ou d'eau potable.

8. Procédé de remplissage d'une pluralité de réservoirs (111, 112) d'eau fraîche ou d'eau potable, comprenant les stades suivants :
a) on se procure une voiture (1) comprenant :
- une pluralité de réservoirs (111, 112) d'eau fraîche ou d'eau potable disposés à l'intérieur de la voiture (1), au moins une unité (101, 102) de consommateur pour la consommation d'eau fraîche ou d'eau potable étant associée à chaque réservoir (111, 112) d'eau fraîche ou d'eau potable ;
- un raccord (2, 12) pour remplir conjointement la pluralité de réservoirs (111, 112) d'eau fraîche ou d'eau potable ;
- un conduit (3, 13) de la voiture (1) comprend un conduit pour l'acheminement d'eau fraîche ou d'eau potable, le conduit menant du raccord (2, 12) à chacun des réservoirs (111, 112) d'eau fraîche ou d'eau potable ;
- des mesureurs (M1, M2) de niveau pour mesurer le niveau (F) dans la pluralité des réservoirs (111, 112) d'eau fraîche ou d'eau potable,
- une vanne (V1, V2, V3, V4) qui, dans le conduit (4, 5) menant à la pluralité de réservoirs (111, 112) d'eau fraîche ou d'eau potable, est montée en amont de chacun des réservoirs (111, 112) d'eau fraîche ou d'eau potable ;
b) on remplit la pluralité de réservoirs (111, 112) d'eau fraîche ou d'eau potable au raccord (2, 12), si au moins l'un des réservoirs (111, 112) d'eau fraîche ou d'eau potable a un niveau (F) qui est plus petit qu'un niveau (F1) respectif de consigne ;
c) on met fin au remplissage de la pluralité de réservoirs (111, 112) d'eau fraîche ou d'eau potable au raccord (2, 12), si le niveau (F) de tous les réservoirs (111, 112) d'eau fraîche ou d'eau potable est plus grand que le niveau (F1) respectif de consigne.

9. Procédé suivant la revendication 8,
dans lequel, dans un autre stade d) on ferme la vanne (V1, V2, V3, V4) menant aux réservoirs (111, 112) respectifs d'eau fraîche ou d'eau potable, si le niveau (F) dans le réservoir (111, 112) respectif d'eau fraîche ou d'eau potable est plus grand qu'un niveau (F1) respectif de remplissage de consigne ou respectivement on ouvre la vanne (V1, V2, V3, V4) respective, si le niveau (F) dans le réservoir (111, 112) respectif d'eau fraîche ou d'eau potable est plus petit qu'un niveau (F1) respectif de remplissage de consigne.

10. Procédé suivant la revendication 9,
dans lequel, par la vanne (V1, V2, V3, V4), on étrangle l'arrivée d'eau fraîche ou d'eau potable au réservoir (111, 112) respectif d'eau fraîche ou d'eau potable, si son niveau (F) respectif se trouve entre un niveau (F1) respectif de consigne et un deuxième niveau (F2) respectif, le deuxième niveau (F2) respectif étant plus petit que le niveau (F1) respectif de consigne.

11. Procédé suivant la revendication 10,
dans lequel on effectue l'étranglement par palier ou en continu.
